# EUROPEAN PATENT SPECIFICATION

(11) **EP 4 482 221 B1**
(45) Date of publication and mention of the grant of the patent: **14.01.2026**
(21) Application number: 23180331.3
(22) Date of filing: 20.06.2023
(51) Int. Cl.: H01M 10/42, H01M 10/48, B60L 3/04, B60L 3/00, B60L 58/21, B60L 58/22, H04W 52/02, H02J 7/00, H04Q 9/00

(54) **CELL MONITORING DEVICE, BATTERY MANAGEMENT SYSTEM, MEASUREMENT DATA TRANSMISSION METHOD AND MEASUREMENT DATA RECEPTION METHOD**
ZELLÜBERWACHUNGSVORRICHTUNG, BATTERIEVERWALTUNGSSYSTEM, MESSDATENÜBERTRAGUNGSVERFAHREN UND MESSDATENEMPFANGSVERFAHREN
DISPOSITIF DE SURVEILLANCE DE CELLULE, SYSTÈME DE GESTION DE BATTERIE, PROCÉDÉ DE TRANSMISSION DE DONNÉES DE MESURE ET PROCÉDÉ DE RÉCEPTION DE DONNÉES DE MESURE

(43) Date of publication of application: 25.12.2024
(73) Proprietor: Munich Electrification GmbH, 81373 Munich (DE)
(72) Inventor: Goede, Stefan, 80799 Munich (DE); Kleppe, Sebastian, 80637 Munich (DE); Prats Valero, Jordi, 81677 Munich (DE); Völkl, Timo, 80539 Munich (DE); Gregg-Smith, Benjamin, 86156 Augsburg (DE)
(74) Representative: Grünecker Patent- und Rechtsanwälte PartG mbB

(56) References cited:
- WO-A1-2014/126685
- KR-A- 20220 131 041
- BANSAL PALLAVI ET AL: "Wireless Battery Management System for Electric Vehicles", 2019 IEEE TRANSPORTATION ELECTRIFICATION CONFERENCE (ITEC-INDIA), IEEE, 17 December 2019 (2019-12-17), pages 1 - 5, XP033765548, [retrieved on 20200428], DOI: 10.1109/ITEC-INDIA48457.2019.ITECINDIA2019-83

## Description

The present disclosure relates to a cell monitoring device and a battery management system, which perform wireless communication to exchange measurement data, and to a measurement data transmission method and a measurement data reception method.

With the advanced development of electric vehicles (EV), in particular battery electric vehicles (BEV), and hybrid electric vehicles (HEV), in particular plug-in hybrid electric vehicles (PHEV), high voltage (HV) battery packs become more and more common in vehicles like buses, trucks or passenger cars. Typically, high voltage battery packs used in electric vehicles comprise 80 to 300 battery cells ("cells") connected in series and/or in parallel, to be capable of supplying high voltages in a range between 400 V and 1000 V. In future applications, even more battery cells may be used and higher voltages may be supplied by the high voltage battery packs.

Such battery packs require a battery management system (BMS) in order to measure cell voltages, perform cell balancing, and monitor the cell temperature for improving the available capacity of the battery pack and increase the individual longevity of each cell. For measuring and balancing a voltage of each of the cells (hereinafter also "cell voltage"), the battery management system comprises specific integrated circuits, so called cell monitoring ICs. One or more cell monitoring ICs are typically soldered onto a printed circuit board (PCB) to form a cell monitoring board (CMB), so that each cell monitoring board can be configured to measure the voltage of between 5 to 24 cells connected in series, although higher or lower numbers of connected cells are possible. In addition, the CMB usually comprises balancing switches and balancing resistors, which are used for discharging specific battery cells in order to balance the cell voltages between the battery cells. Depending on the used number and types of cell monitoring ICs, certain peripheral circuits, like a power supply (linear transistor, DCDC, or similar), which supplies the electronic circuits of the communication interface (transformer, capacitors, or similar) and/or other capacitors or resistors, become necessary.

In order to allow a main controller of the BMS to communicate with the cell monitoring ICs, for receiving the measured cell voltages or closing the balancing switches, if determined to be necessary, it is common to provide wired communication lines between the main controller of the BMS and the cell monitoring boards of the BMS. However, since the cell monitoring circuit is necessarily electrically connected to cells of the high voltage battery, it is alternatively known to provide wireless communication between the cell monitoring boards and a wireless gateway manager (WGM), which is connected by communication lines to the main controller of the BMS. This allows to enhance the isolation between the high voltage battery and the main controller of the BMS. Here, it is known to use Bluetooth (registered trademark) as a wireless communication technology for transmitting measurement data from the CMB to the wireless gateway manager.

For example, WO 2014/126685 A1, KR 2022 0131041 A and BANSAL PALLAVI ET AL: "Wireless Battery Management System for Electric Vehicles" disclose wireless transmission of battery cell states in a battery management system.

In this respect, the inventors of the present invention have found that while Bluetooth allows for energy saving communication, it is limited in throughput, so that the possible amount of cell monitoring boards communicating with one radio node of the wireless gateway manager is limited. Accordingly for complex battery structures, an additional amount of radio nodes become necessary for the wireless gateway manager, which increase the complexity and cost of the system.

Accordingly, it is an object of the present invention to provide a cell monitoring device and a battery management system, which allow for a higher wireless communication throughput between the cell monitoring device and a gateway device, while at the same time limiting of the power consumption of the cell monitoring device, and to provide corresponding communication methods, in order to overcome the above described disadvantages. Furthermore, it is an object of the present invention to provide a compact and economic solution.

At least one of these objects is solved by the present invention as defined in the independent claims.

A cell monitoring device according to a first general aspect comprises a cell monitoring unit, which is configured to measure a state of at least one battery cell of a battery in order to generate measurement data, and a first communication unit, which is configured to perform wireless communication with a gateway device in order to transmit the measurement data indicating the measured state of the at least one battery cell. The first communication unit is configured to perform wireless communication with the gateway device by a first communication scheme, when the cell monitoring device is in an active mode, and to perform wireless communication with the gateway device by a second communication scheme different from the first communication scheme, when the cell monitoring device is in a sleep mode.

In this manner, the cell monitoring device can communicate with a gateway device of a battery management system with a first communication scheme providing a high throughput, when the charge monitoring board is in the active state, for example, when the battery is charged or discharged, so that a larger amount of measurement data can be transmitted to the central control unit of the battery management system for determining the state of the battery and its individual battery cells with sufficient reliability even for complex battery structures. At the same time, the
cell monitoring device can communicate with the gateway device with a second power saving communication scheme, when the battery is not charged or discharged and the charge monitoring board is in the sleep state, so that the power consumption by the charge monitoring boards can be drastically reduced. For example, this allows to avoid discharging of a vehicle battery of a parked electric vehicle that uses the charge monitoring board for remote monitoring of the battery. Since the first communication unit comprises a single radio chip, which supports both of the first communication scheme and of the second communication scheme, the structure of the cell monitoring device can be kept simple.

According to a second aspect, the cell monitoring device is configured to enter into the sleep mode, in response to receiving a sleep request by the first communication unit. In doing so, the main control unit of a BMS can inform the cell monitoring device to change to a power-saving mode, e.g. in response to determining that the operation of the battery has been stopped or in response to controlling the operation of the battery to stop. Alternatively, the cell monitoring device can also be configured to independently enter the sleep mode, for example a predetermined time after the last transmission or reception of a message to or from the gateway device.

According to a third aspect, the cell monitoring device is configured to enter into the active mode, in response to receiving a wake-up request by the first communication unit. By the wake-up request, the main control unit can wake up the cell monitoring devices from the sleep mode, especially when the main control unit wants to request detailed measurement data of the at least one battery cell, in response to determining that the operation of the battery has been started or in response to controlling the operation of the battery to start.

According to a fourth aspect, in response to determining that the state of the at least one battery cell is a state, in which an operation condition is critical for the at least one battery cell, the cell monitoring device is configured to enter into the active mode and optionally the first communication unit is configured to transmit a wake-up request to at least one another cell monitoring device. In other words, in response to detecting a hazardous event or hazardous state of the at least one battery cell, like an overheating or over-discharging, the cell monitoring device wakes itself up and enters the active mode in order to transmit measurement data of the at least one battery cell with the high throughput provided by the first communication scheme. In addition, when the cell monitoring devices have the ability to communicate between each other to form a mesh network, the cell monitoring device, which detects the hazardous event or hazardous state can also inform and wake up the remaining cell monitoring devices.

According to a fifth aspect, in the active mode, the first communication unit is configured to transmit the measurement data to the gateway device, and in the sleep mode, the first communication unit is configured to transmit alive signals to the gateway device. By reducing the signal transmission in the sleep mode to transmitting active signal as heartbeat signals, which inform the main control unit of the BMS that the cell monitoring device is working and that the state of the at least one battery cell is non-critical, instead of transmitting more detailed measurement data, the power consumption of the cell monitoring device can be further reduced.

According to a sixth aspect, the first communication unit is configured to transmit the measurement data with a larger periodicity in the active mode than the periodicity, with which the alive signals are transmitted in the sleep mode. In doing so, the cell monitoring device can provide detailed measurement data in the active mode, while saving power in the sleep mode.

According to a seventh aspect, the first communication scheme uses a larger transmit power than the second communication scheme. In this manner, it is possible to enhance the reliability of the data transmission when the battery is used and the cell monitoring device is in the active state, so that a reliable wireless data transmission can be guaranteed even for battery systems having a large number and complicated structure of battery modules with remote cell monitoring boards.

According to an eighth aspect, the first communication scheme performs wireless communication through a wireless local area network, WLAN. By the high throughput achievable when using radio communication with a WLAN standard, in particular a Wi-Fi ("Wireless Fidelity") standard, the cell monitoring device allows for remote measurements of the state of the battery cells of the battery even when the battery has a complex structure including a large amount of battery cells, while the architecture of the gateway device, which communicates with the charge monitoring device can be kept simple, even if it communicates with a large number of charge monitoring devices. Alternatively, to the WLAN standard, it is also possible, for example, to use a UWB ("ultra-wideband") standard. UWB in general uses a larger frequency bandwidth of at least 500 MHz, but has a lower power spectral density and accordingly a lower power consumption per transmission compared to WLAN, so that the power consumption can be further reduced.

According to a ninth aspect, the second communication scheme performs wireless communication by a short-range wireless communication standard. In particular, it is advantageous that the cell monitoring boards communicate in the sleep mode with a Bluetooth (registered trademark) or Bluetooth low energy standard with the gateway device, since these standards provide for a specifically low energy consumption per transmission. This is especially advantageous, since in the sleep mode small-sized heartbeat signals are transmitted by the cell monitoring device, instead of the large-sized data packets that are transmitted in the active mode.

To provide for an space-saving and cost efficient implementation of the cell monitoring device, according to the tenth aspect the first communication unit has at least one common antenna element for performing the wireless communication through the first communication scheme and through the second communication scheme.

According to an eleventh aspect, there is also provided a measurement data transmission method, performed by a cell monitoring device, which comprises the steps of measuring a state of at least one battery cell of a battery in order to generate measurement data, and performing wireless communication with a gateway device in order to transmit the measurement data indicating the measured state of the at least one battery cell. Hereby, the wireless communication with the gateway device is performed by a first communication scheme, when the cell monitoring device is in an active mode, and the wireless communication with the gateway device is performed by a second communication scheme different from the first communication scheme, when the cell monitoring device is in a sleep mode.

According to a twelfth aspect, there is also provided a battery management system, which comprises a main control unit and a gateway device, wherein the gateway device has at least one second communication unit, which is configured to perform wireless communication with at least one cell monitoring device, which is configured to measure a state of at least one battery cell of a battery, in order to receive measurement data indicating the measured state of the at least one battery cell. Hereby, the second communication unit is configured to perform wireless communication with the cell monitoring device by a first communication scheme, when the main control unit determines the cell monitoring device to be in an active mode, and to perform wireless communication with the cell monitoring device by a second communication scheme different from the first communication scheme, when the main control unit determines the cell monitoring device to be in a sleep mode.

In this manner, the gateway device of the battery management system can communicate with the cell monitoring devices, which are in the active state, with a high throughput through the first communication scheme, for example, when the battery is charged or discharged, so that a sufficient amount of measurement data can be received by the main control unit for determining the state of the battery and its individual battery cells with sufficient reliability even for complex battery structures. At the same time, the gateway device allows the cell monitoring devices to communicate with a power-saving second communication scheme, when the battery is not charged or discharged and the charge monitoring board is in the sleep state, so that the power consumption by the charge monitoring boards (and the gateway device) can be drastically reduced. For example, this allows to avoid discharging of a vehicle battery of a parked electric vehicle that uses the charge monitoring board for remote monitoring of the battery. Since the second communication unit comprises a single radio chip, which supports both of the first communication scheme and of the second communication scheme, the structure of the gateway device can be kept simple.

According to a thirteenth aspect, the main control unit is configured to control the at least one second communication unit to transmit a wake-up request to the at least one cell monitoring device, in order to acquire measurement data from the at least one cell monitoring device. In this manner, the main control unit can indicate to the charge monitoring devices to switch to the active mode, when at least one disconnection switch is closed, so that the main control unit can receive a sufficient amount of measurement data when charging or discharging of the battery occurs. Similar, the main control unit can indicate to the charge monitoring devices to switch to the sleep mode, when the at least one disconnection switch is opened, in order to allow the cell monitoring boards to enter into a power saving mode when charging or discharging of the battery is interrupted. However, the main control unit may not only wake-up the charge monitoring boards depending on the charging or discharging state, but also with a pre-set interval (e.g. every 10 min, 30 min, 60 min or similar), when the battery is disconnected, in order to perform periodic activity checks of the battery cells.

According to a fourteenth aspect, the battery management system further comprises at least one cell monitoring device according to one of the first to tenth aspects.

According to a fifteenth aspect, there is also provided a measurement data reception method, performed by a battery management system, which comprises performing wireless communication with at least one cell monitoring device, which is configured to measure a state of at least one battery cell of a battery, in order to receive measurement data indicating the measured state of the at least one battery cell. Hereby, the wireless communication with the cell monitoring device is performed by a first communication scheme, when the cell monitoring device is determined to be in an active mode, and the wireless communication with the cell monitoring device is performed by a second communication scheme different from the first communication scheme, when the cell monitoring device is determined to be in a sleep mode.

The accompanying drawings are incorporated into the specification and form a part of the specification to illustrate several examples of the present disclosure. These drawings, together with the description serve to explain the principles of the disclosure. The drawings are merely for the purpose of illustrating the preferred and alternative examples of how the disclosure can be made and used, and are not to be construed as limiting the disclosure to only the illustrated and described examples. Furthermore, several aspects of the examples may form-individually or in different combinations-solutions according to the present disclosure. The following described examples thus can be considered either alone or in an arbitrary combination thereof. Further features and advantages will become apparent from the following more particular description of the various examples of the disclosure, as illustrated in the accompanying drawings, in which like references refer to like elements, and wherein:
- **FIG. 1**: is a schematic block diagram of a first exemplary battery management system;
- **FIG. 2**: is another schematic block diagram of the first exemplary battery management system;
- **FIG. 3**: is a sequence diagram showing an exemplary communication sequence between a charge mounting board and a gateway device of the first exemplary battery management system;
- **FIG. 4**: is a schematic block diagram of a second exemplary battery management system.

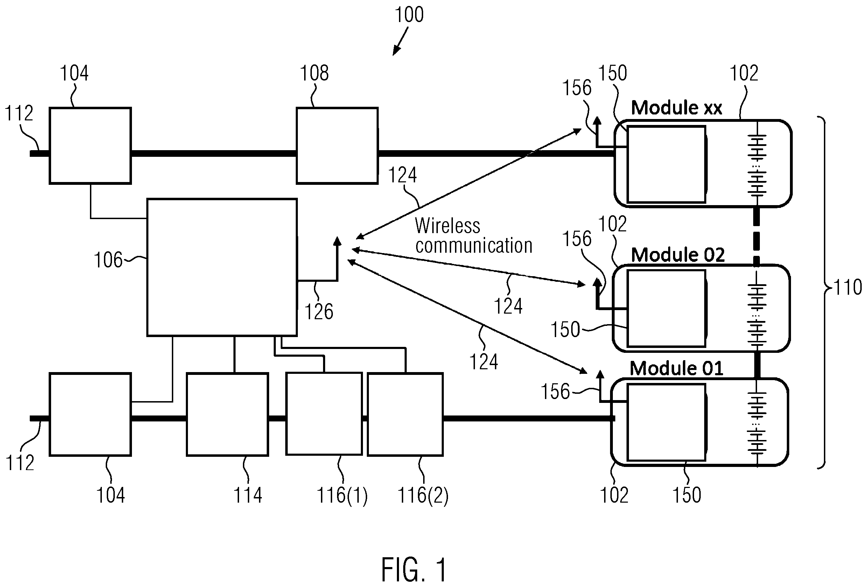

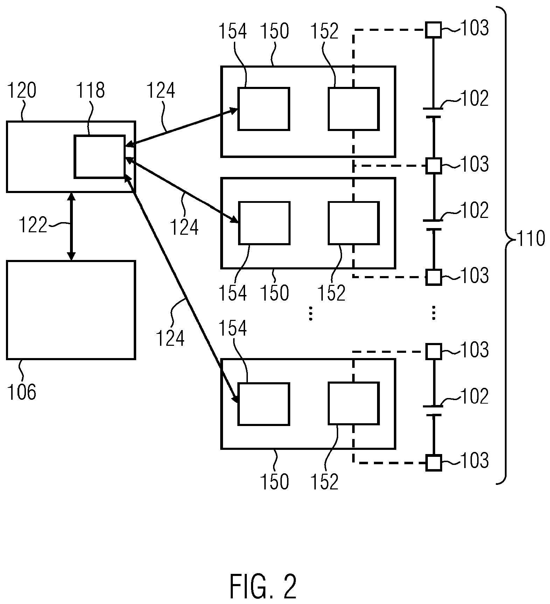

The present disclosure will now be further explained referring to the Figures and first referring to Figs. 1 and 2, which show schematic block diagrams of a first exemplary battery management system 100 benefitting from the aspects of the present disclosure. The battery management system 100 is configured to monitor the operation of a high voltage battery pack or high voltage power supply system, which comprises a high voltage battery 110 for storing and supplying electric power. The high voltage battery 110 is electrically connected to a high voltage bus 112 and supplies electric loads, which are electrically connected to the high voltage bus 112, or is charged by a charger, which is electrically connected to the high voltage bus 112. In an application scenario exemplarily described in the following, the high voltage battery 110 is used in an electric vehicle as a power supply for the electric drive train. Alternatively, other application scenarios are also possible, especially application scenarios where a large amount of power is stored in high voltage battery packs being comprised of a large number of battery cells, like in a power grid or an uninterruptible power system.

The high voltage battery pack comprises a plurality of battery modules 102, which are connected in series at connection nodes 103 (not shown in Fig. 1), so as to form the high voltage battery 110. The battery modules 102 are subunits of the high voltage battery 110, thereby providing module voltages, which sum up to the predetermined high voltage output by the high voltage battery 110 to the high voltage bus 112. To distinguish each of the number of N of battery modules 102, the battery module 102 are signified in Fig. 1 as Module 01, Module 02... Module N from the low potential side of the HV battery 110 at the bottom to the high potential side of the HV battery 110 at the top. Each of the battery modules 102 comprises at least one battery cell. Hereby, a battery cell may be a physical battery cell or may comprise several physical battery cells electrically connected in parallel on a cell level. Exemplarily, 5 to 24 battery cells each having a cell voltages in the range of 3.3 V to 4.3 V, may be electrically connected in series to form each of the battery modules 102. Accordingly, in this example each battery module 102 may provide a module voltage in the range between around15 V to 100 V. However, also a different number of battery cells with a different cell voltage may be electrically connected to form the battery modules 102. Especially a battery module may also be formed of a single battery cell.

In order to connect and disconnect the HV battery 110 to and from the HV bus 112, the BMS 100 comprises disconnection switch devices 104, which are electrically connected respectively to the high voltage side and to the low voltage side of the HV bus 112. Opening and closing of the disconnection switch devices 104 is controlled by a main control unit 106 of the BMS 100 in order to regulate the power output or power input from and to the HV battery 110.

For emergency cases, for example in case of an accident or crash, especially when the HV battery pack is used to power an electric vehicle, the BMS 100 usually comprises at least one fuse 108 that melts, when extreme overcurrent occurs and/or at least one pyroelectric device 114, also known as pyrofuse, which can be ignited by the main control unit 106 of the BMS 100 in case of an accident or crash to immediately and permanently interrupt the power supply by the high voltage battery pack. Further, the BMS comprises current sensors 116(1) and 116(2), which are electrically connected in series with the battery modules 102. This allows the BMS 100 to redundantly measure a battery current by detecting the voltage respectively applied across the current sensors 116(1) and 116(2).

In order to determine the cell voltage of each battery cell of the high voltage battery 110 individually and of the voltage of the high voltage battery 110 as a whole, the BMS 100 comprises for each battery module a cell monitoring board 150, which may be also signified throughout this document as charge monitoring board 150, as a cell monitoring device. Each cell monitoring board 150 comprises a cell monitoring unit 152 with measurement circuits, e.g. in form of one or more analog-to-digital converters (ADCs), provided on a specific integrated circuit as a so-called cell monitoring IC. The measurement circuits enable the cell monitoring unit 152 to measure a state of each battery cell of the battery module 102, to which the cell monitoring board 150 is electrically connected, individually, by measuring the voltages of each of those battery cells and by measuring the temperatures of all or at least a part of those battery cells. Optionally, the measurement circuit may also be electrically connected to suitable external or internal sensors for measuring other battery module parameters, such as a temperature, a humidity, a pressure, a gas concentration or a fluid level. Each of the optional parameters may be measured for the battery module 102, for all battery cells of the battery module 102, or for a part of the battery cells of the battery module 102. In addition, the cell monitoring unit 152 preferably also comprises balancing circuits having balancing switches, for example in form of semiconductor switches, which are closed (and opened) by instructions of the main control unit 106 in order to balance the voltages of the battery cells, to which the cell monitoring board 150 is electrically connected.

According to the present disclosure, the cell monitoring boards is designed to enable remote monitoring of the state of the individual battery cells of the HV battery 110 and of the HV battery as a whole in the battery management system 100, so that a connection between the main control unit 106 and the cell monitoring boards 150 by wire (cable) is avoided. For this purpose, each cell monitoring board 150 comprises a first communication unit (or first transceiver) 154, which is configured to wirelessly transmit the measurement data acquired by the cell monitoring unit 152 of the cell monitoring board 150 by radio communication to a second communication unit (or second transceiver) 118 of a gateway device 120 (also called wireless gateway manager). As indicated by arrows 124, the wireless communication between the gateway device 120 and the cell monitoring boards 150 is bi-directional and includes that the main control unit 106 can transmit requests and instructions to the cell monitoring units 152. For example, the gateway device 120 can transmit requests for measurement data or instructions to close specific ones of the balancing switches to one or more of the cell monitoring board 150.

The gateway device 120 receives the measurement data acquired from all the cell monitoring units 152 of the battery management system 100 and forwards the received measurement data to the main control unit 106, so as to enable the main control unit 106 to determine the actual state of the HV battery 110 and of its individual battery cells. As illustrated in Fig. 2, in an exemplary implementation the gateway device 120 is connected to the main control unit 106 of the BMS by a wire (indicated by arrow 122) to allow communication via a communication bus like a CAN bus, SPI ("Serial Peripheral Interface") or similar. In an alternative implementation, the gateway device 120 may be an integral part of the main control unit 106.

Generally the electronic components mounted on the cell monitoring board 150, like the electronic circuits of the cell monitoring units 152 and of the first communication units 154 or other optional electronic components, like filter circuits, which improve the robustness of the measurements, are directly supplied from the high voltage battery 110, in particular from the battery cells of the battery module 102, to which the cell monitoring board 150 is connected. Accordingly, for performing the measurements and the wireless communication with the main control unit 106, the cell monitoring boards consume electric power, which is stored in the HV battery 110. The consumed power is accordingly not available for supplying the external electronic loads, which are electrically connected to the HV bus 112. On the other hand, it is indispensable that the cell monitoring boards transmit sufficient and reliable measurement data of the state of the battery cells to the main control unit 106, so as to enable the main control unit to reliably determine the state of the HV battery 110 and its battery cells, especially when the HV battery 110 is charged or discharged.

For this reason, the cell monitoring boards 150 are configured to have an active mode and a sleep mode. In the active mode the electronic components mounted on the cell monitoring board 150 consume a larger amount of power of the HV battery 110 compared to the sleep mode where the power consumption of the cell monitoring boards 150 is reduced to a minimum. In other words, the cell monitoring boards 150 have a lower power consumption in the sleep mode than in the active mode. In order to provide sufficient measurement data to the main control unit 106 of the BMS 100, each cell monitoring board 150 is especially configured to be in the active mode, when the disconnection switch devices 104 are closed and the HV battery 110 is discharged or charged by current provided to or from the HV bus 112. On the other hand, the cell monitoring board 150 is especially configured to be in the sleep mode, when the HV battery 110 is disconnected by the disconnection switch devices 104 from the HV bus 112, because then the main control unit 106 only needs to receive status signals (or alive signals) from the cell monitoring board 150, which indicate that the battery modules 102 of the HV battery 110 are in non-critical condition.

Since in the sleep mode of the cell monitoring board 150, fewer data are transmitted than in the active mode of the cell monitoring board 150, the first communication unit 154 is configured to switch between a first communication scheme used in the active mode of the cell monitoring board 150 and a second communication scheme used in the sleep mode of the cell monitoring board 150 to perform the wireless communication with the second communication unit 118 of the gateway device 120. Consequently, the first communication unit 154 of each cell monitoring board 150 and the second communication unit 118 of the gateway device 120 are configured to use at least two different communication schemes or communication standards for performing the wireless communication.

In the active mode of the cell monitoring boards 150, the first communication unit(s) 154 and the second communication unit 118 use a wireless communication standard as the first communication scheme, which has a sufficient throughput, in particular a sufficient data transmission rate and bandwidth, for reliably transmitting the measurement data from all the cell monitoring boards 150 to the gateway device 120 without the need of providing a complicated receiver structure for the second communication unit 118 of the gateway device 120. Especially, in the active mode of the cell monitoring boards 150, the first communication unit(s) 154 and the second communication unit 118 are configured to perform wireless communication through a WLAN ("Wireless Local Area Network") standard, in particular through a Wi-Fi ("Wireless Fidelity") standard, like a Wi-Fi 6 or similar standard. Alternatively, in the active mode for example UWB ("ultra-wideband") could be used as a radio communication technology, which uses a larger frequency bandwidth of at least 500 MHz, but has a lower power spectral density and accordingly a lower power consumption per transmission compared to WLAN. In this case, the first communication unit(s) 154 and the second communication unit 118 would use an appropriate UWB standard for performing the wireless communication.

In the sleep mode of the cell monitoring boards 150, the first communication unit(s) 154 and the second communication unit 118 switch to a wireless communication standard as the second communication scheme, which has a smaller power consumption per transmission than the first communication scheme, in order to reduce the power consumption of the cell monitoring board 150 in the sleep mode. Especially, in the sleep mode of the cell monitoring boards 150, the first communication unit(s) 154 and the second communication unit 118 are configured to perform wireless communication through a short-range wireless communication standard like a Bluetooth (registered trademark) or Bluetooth low energy standard. Alternatively, in the sleep mode the first communication unit(s) 154 and the second communication unit 118 can use, for example, near field communication or an appropriate UWB standard for performing the wireless communication, which allows for a power reduced communication.

In a preferred implementation, in the sleep mode the cell monitoring boards 150 communicate with a lower frequency in time with the gateway device 120 than in the active mode. Furthermore, the signals transmitted in the sleep mode by the cell monitoring boards 150 preferably have a smaller data size than in the active mode. In particular, in the sleep mode the cell monitoring boards 150, or more precisely the first communication unit(s) 154 of the cell monitoring boards 150, may transmit only alive signals ("heartbeat signals") to the gateway device 120, or more precisely to the second communication unit 118 of the gateway device. Reception of the alive signal from a cell monitoring board 150 indicates to the main control unit 106 of the BMS 100 that the state of the corresponding battery cells, e.g. the temperature and/or another parameter of the corresponding battery cells, is in a non-critical condition, so that safe operation of the corresponding battery cells is guaranteed. But to save transmission power, the alive signals do not comprise the same amount of measurement data as the transmission packets transmitted by the cell monitoring board 150 in the active mode.

For the purpose of providing a simplified structure of the cell monitoring boards 150 and the gateway device 170, the cell monitoring boards 150 and the gateway device 170 respectively have a (at least one) common antenna (see reference numerals 126 and 156 in Fig. 1), which supports communication through the first communication scheme and through the second communication scheme. Alternatively, each of the cell monitoring boards 150 and the gateway device 170 may have multiple antennas, for example one or more dedicated first antennas configured for performing wireless communication by the first communication scheme and one or more dedicated second antennas configured for performing wireless communication by the second communication scheme.

Notably, the gateway device 120 preferably has one second communication unit, in order to provide a simplified structure of the gateway device 170 and to reduce the complexity of the BMS 100. However, in an alternative implementation, the gateway device 120 may have more than one second communication unit 118, for example to provide a backup system, when one of the second communication units 118 fails, e.g. due to a hardware fault. In this manner, it can be prevented that, in case of a fault in one of the second communication units 118, the monitoring of the HV battery 110 would stop, which would necessitate in a sudden stop of power supply by the HV battery 110 in order to bring the HV battery 110 in a safe state. As another alternative, more than one second communication units 118 may be used in parallel. The main controller 106 of the BMS 100 may determine, which of the second communication units 118 to use for communication with a specific cell monitoring board 150, e.g. based on a signal reception quality of the received communication signals. In particular, the main controller 106 may, for example, switch between the second communication units 118 for performing the wireless communication with a specific cell monitoring board 150 depending on the signal reception quality of the received communication signals.

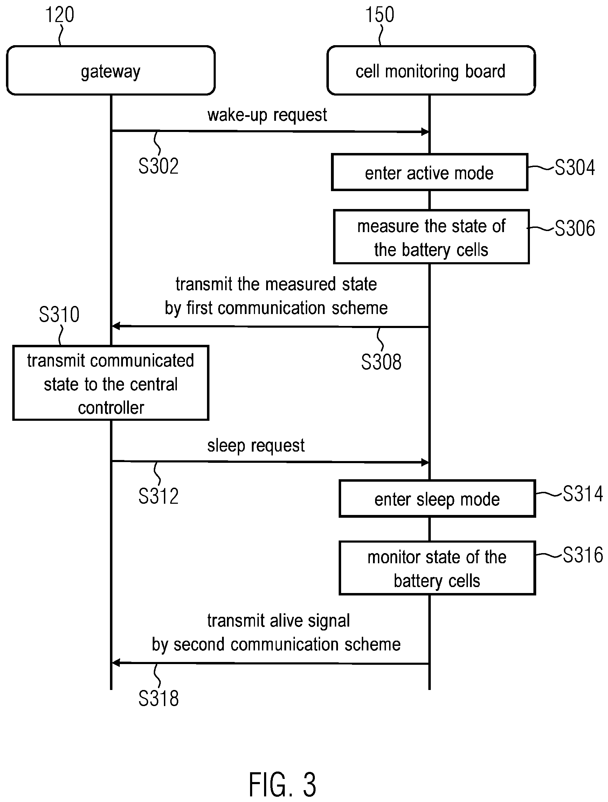

Fig. 3 shows a processing sequence of an exemplary communication process between one of the cell monitoring boards 150 and the gateway device 120. Here, it is assumed that the cell monitoring board 150 is in the sleep state, before the start of the process. Then, when the main control unit 106 of the BMS 100 determines that the power supply of the HV battery 110 has started, for example, when a user presses an ignition key to start a motor of an electric vehicle or when a charging process of the HV battery 110 is started, the main control unit controls the second communication unit 118 of the gateway device 120 to transmit a wake-up request to the first communication unit 154 of the cell monitoring board 150 in a step S302. Alternatively, the main control unit may not only wake-up the charge monitoring boards depending on the start of power supply (or charging) of the HV battery 110, but for example with a pre-set interval (e.g. every 10 min, 30 min, 60 min or similar), even when the HV battery 110 is disconnected from the HV bus 112 in order to perform periodic activity checks of the cell monitoring boards 150 and the connected battery cells. As an example, the wake up request can be a data request message, which indicates to the cell monitoring board that the main control unit 106 is waiting for measurement data from the cell monitoring unit 152.

In response to receiving the wake-up request, the charge monitoring board changes in step S304 its operation mode from the sleep mode to the active mode. The entering of the active mode results especially in changing the communication scheme used by the first communication unit 154 and by the second communication unit 118 from the second communication scheme, e.g. a Bluetooth Low Energy standard, to the first communication scheme, e.g. a Wi-Fi standard, in order to enhance the data transmission throughput from the cell monitoring board 150 to the gateway device 120. Here, it should be noted that the cell monitoring boards 150 may also have the ability to enter the active mode without receiving the wake-up request from the gateway device 120, for example, when a cell monitoring board 150 determines that one of the connected battery cell is in an critical state, e.g. when one of the connected battery cells is overheated, overcharged or over-discharged.

When the cell monitoring board 150 is in the active mode, the cell monitoring unit 152 measures (step S306) the state of the battery cells of the connected battery module 102 to generate measurement data for the battery cells of the battery module 102. In particular, the cell monitoring unit 152 may measure the voltage of each battery cell of the connected battery module 102. Optionally, the cell monitoring unit 152 may measure one or more other battery module parameter, such as a temperature, a humidity, a pressure, a gas concentration or a fluid level, each parameter possibly for the battery module 102, for each of the battery cells of the battery module 102, or for a part of the battery cells. In the following step S308, the first communication unit 154 transmits the measurement data to the second communication unit 118 of the gateway device 170 by using the first communication scheme. From the gateway device 170, the measurement data is transmitted (S310) via the cable connection 122 to the main control unit 106, which processes the measurement data and determines the state of the HV battery 110 based on the received measurement data. To make the determination reliable, steps S306 to S310 are repeated with a high frequency, for example measurements data may be transmitted with a minimum frequency of 1 every 100 ms, so that at least 10 packets of measurement data are transmitted per second.

The cell monitoring board 150 stays in the active mode until the main control unit 106 determines that the power supply of the HV battery 110 has stopped, for example, when a user presses an ignition key to switch off the motor of the electric vehicle or when the charging process of the HV battery 110 is ended. Then, the main control unit controls the second communication unit 118 of the gateway device 120 to transmit a sleep request to the first communication unit 154 of the cell monitoring board 150 in a step S312. Alternatively, the sleep request could be an indication that informs the cell monitoring board 150 that the disconnection switch devices 104 have been opened and that the operation of the high voltage battery 110 has been stopped. In response to receiving the sleep request, the charge monitoring board changes in step S314 its operation mode from the active mode to the sleep mode. The entering of the sleep mode results especially in switching the communication scheme used by the first communication unit 154 and by the second communication unit 118 from the first communication scheme, e.g. a Wi-Fi standard, to the second communication scheme, e.g. a Bluetooth Low Energy standard, in order to reduce the energy consumption of a single transmission from the cell monitoring board 150 to the gateway device 120.

Alternatively, the cell monitoring boards 150 may enter the sleep mode without receiving the sleep request from the gateway device 120, for example, a predetermined time after the last communication message has been received from or transmitted to the gateway device 170.

When the cell monitoring board 150 is in the sleep mode, the cell monitoring unit 152 monitors (step S316) the state of the battery cells of the connected battery module 102 to check that the battery cells are in a non-critical condition. For example, the cell monitoring unit 152 may determine by use of comparator circuits that a voltage of each battery cell is above a low voltage limit to avoid over-discharging of the battery cells, that the voltage is below a high voltage limit to avoid overcharging of the battery cells and/or that the other battery module parameters, like the temperature, a gas pressure or a fluid level, each are below or above a certain thresholds.

If the cell monitoring unit 152 determines that the battery cells are in the non-critical condition, the first communication unit 154 transmits (S318) the alive signal to the second transmission unit 118 of the gateway device 170 by using the second communication scheme. This allows the main control unit 106 of the BMS 100 to determine that all battery cells of the HV battery 110 are in non-critical condition as long as the HV battery 110 is not operated (charged or discharged). The alive signal is a heartbeat signal, which is transmitted with a lower frequency than the measurement data is transmitted in the active mode. For example, the alive signal may be transmitted with a maximum frequency of 1 every 2 seconds, in order to reduce the power consumption of the cell monitoring board 150 in the sleep mode. As soon as the cell monitoring unit 152 determines that at least one of the battery cells is in a critical condition, the cell monitoring unit 152 controls the first communication unit 154 to send a warning signal to the gateway device 170 in order to inform the main control unit 106 of the critical condition. The cell monitoring board 150 may either directly enter the active mode after the critical condition has been determined or await the instructions (wake-up request) received from the main control unit 106 through the gateway device 170. In particular, since the first communication unit 154 and the second communication unit 118 are both configured to receive communication by the first communication scheme and by the second communication scheme, the wake-up request, the sleep request or the warning signal may be transmitted by using the first communication scheme or by using the second communication scheme.

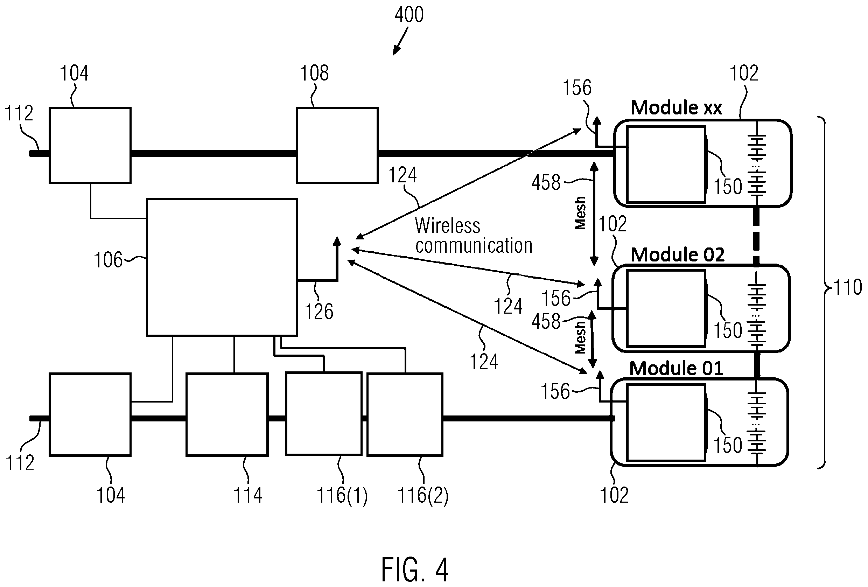

Fig. 4 shows a schematic block diagram of a second exemplary battery management system 400. The second exemplary battery management system 400 shares the configuration and function of the first battery management system 100 described so far. In addition, as indicated by the arrows 458, the first communication units 154 of the cell monitoring boards 150 are configured to perform wireless communication among each other, to form a mesh network.

The mesh communication between the cell monitoring boards is preferably performed with the second communication scheme, which is more power efficient than the first communication scheme. In particular, the cell monitoring boards 150 of the second exemplary battery management system 400 are configured to exchange wake-up requests among each other in response to determining that one of the connected battery cell is in a critical state, e.g. when one of the connected battery cells is overheated, overcharged or over-discharged. In other words, in the battery management system 400, not only the gateway device 120 can activate the cell monitoring boards 150, but also each or a part of the cell monitoring boards 150 can activate other cell monitoring boards 150 to enter the active mode. In particular, the cell monitoring boards 150 can be chained to cause each other to enter the active mode, after at least one of the cell monitoring boards has detected a hazardous event or hazardous state of the at least one battery cell, like an overheating or over-discharging.

The communication between the cell monitoring boards 150 and the gateway device 170 is performed as described for the battery management system 100, by the first communication scheme, when the cell monitoring boards 150 are in the active mode, and by the second communication scheme, when the cell monitoring boards are in the sleep mode.

Since the cell monitoring boards 150 communicate by the second communication among each other, it is not necessary in the battery management system 400 that all of the cell monitoring boards 150 have the functionality to communicate with both of the first communication scheme and the second communication scheme, but instead one or more of the cell monitoring boards 150 may serve as a master cell monitoring board, which supports both communication schemes and communicates its own measurement data and the measurement data of the remaining cell monitoring boards to the gateway device 170 when the cell monitoring boards 150 are in the active mode.

### REFERENCE NUMERALS

| | |
|---|---|
| 100, 400 | battery management system |
| 102 | battery module |
| 103 | connection nodes |
| 104 | disconnection switch devices |
| 106 | main control unit |
| 108 | fuse |
| 110 | (high voltage) battery |
| 112 | high voltage bus |
| 114 | pyroelectric device |
| 116 | current sensors |
| 118 | second communication unit (transceiver) |
| 120 | gateway device |
| 122 | cable connection |
| 126 | gateway device antenna |
| 150 | cell monitoring board(s) |
| 152 | cell monitoring unit |
| 154 | first communication unit (transceiver) |
| 156 | CMB antenna |

## Claims

1. A cell monitoring device (150), which comprises:
a cell monitoring unit (152), which is configured to measure a state of at least one battery cell of a battery (110) in order to generate measurement data; and
a first communication unit (154), which is configured to perform wireless communication with a gateway device (120) in order to transmit the measurement data indicating the measured state of the at least one battery cell;
**characterized in that** the first communication unit (154) is configured
• to perform wireless communication with the gateway device (120) by a first communication scheme, when the cell monitoring device (150) is in an active mode, and
• to perform wireless communication with the gateway device (120) by a second communication scheme different from the first communication scheme, when the cell monitoring device (150) is in a sleep mode.

2. The cell monitoring device (150) according to claim 1, wherein the cell monitoring device (150) is configured to enter into the sleep mode, in response to receiving a sleep request by the first communication unit (154).

3. The cell monitoring device (150) according to one of claims 1 or 2, wherein the cell monitoring device (150) is configured to enter into the active mode, in response to receiving a wake-up request by the first communication unit (154).

4. The cell monitoring device (150) according to one of claims 1 to 3, wherein, in response to determining that the state of the at least one battery cell is a state, in which an operation condition is critical for the at least one battery cell, the cell monitoring device (150) is configured to enter into the active mode and optionally the first communication unit (154) is configured to transmit a wake-up request to at least one another cell monitoring device (150).

5. The cell monitoring device (150) according to one of claims 1 to 4, wherein, in the active mode, the first communication unit (154) is configured to transmit the measurement data to the gateway device (120), and in the sleep mode, the first communication unit (154) is configured to transmit alive signals to the gateway device (120).

6. The cell monitoring device (150) according to claim 5, wherein the first communication unit (154) is configured to transmit the measurement data with a larger periodicity in the active mode than the periodicity, with which the alive signals are transmitted in the sleep mode.

7. The cell monitoring device (150) according to one of claims 1 to 6, wherein the first communication scheme uses a larger transmit power than the second communication scheme.

8. The cell monitoring device (150) according to one of claims 1 to 7, wherein the first communication scheme performs wireless communication through a wireless local area network, WLAN.

9. The cell monitoring device (150) according to one of claims 1 to 8, wherein the second communication scheme performs wireless communication by a short-range wireless communication standard.

10. The cell monitoring device (150) according to one of claims 1 to 9, wherein the first communication unit (154) has at least one common antenna element (156) for performing the wireless communication through the first communication scheme and through the second communication scheme.

11. A measurement data transmission method, performed by a cell monitoring device (150), comprising:
measuring a state of at least one battery cell of a battery (110) in order to generate measurement data; and
performing wireless communication with a gateway device (120) in order to transmit the measurement data indicating the measured state of the at least one battery cell;
**characterized in that** the wireless communication with the gateway device (120) is performed by a first communication scheme, when the cell monitoring device (150) is in an active mode, and
the wireless communication with the gateway device (120) is performed by a second communication scheme different from the first communication scheme, when the cell monitoring device (150) is in a sleep mode.

12. A battery management system (100, 400), which comprises a main control unit (106) and a gateway device (120),
wherein the gateway device (120) has at least one second communication unit (118), which is configured to perform wireless communication with at least one cell monitoring device (120), which is configured to measure a state of at least one battery cell of a battery (110), in order to receive measurement data indicating the measured state of the at least one battery cell, and
**characterized in that** the second communication unit (118) is configured
• to perform wireless communication with the cell monitoring device (150) by a first communication scheme, when the main control unit (106) determines the cell monitoring device to be in an active mode, and
• to perform wireless communication with the cell monitoring device (150) by a second communication scheme different from the first communication scheme, when the main control unit (106) determines the cell monitoring device to be in a sleep mode.

13. The battery management system (100, 400) according to claim 12, wherein the main control unit (106) is configured to control the at least one second communication unit (118) to transmit a wake-up request to the at least one cell monitoring device (150), in order to acquire measurement data from the at least one cell monitoring device (150).

14. The battery management system (100, 400) according to one of claims 12 or 13, further comprising at least one cell monitoring device (150) according to one of claims 1 to 10.

15. A measurement data reception method, performed by a battery management system (100, 400), comprising:
performing wireless communication with at least one cell monitoring device (150), which is configured to measure a state of at least one battery cell of a battery (110), in order to receive measurement data indicating the measured state of the at least one battery cell,
**characterized in that** the wireless communication with the cell monitoring device (150) is performed by a first communication scheme, when the cell monitoring device (150) is determined to be in an active mode, and
the wireless communication with the cell monitoring device (150) is performed by a second communication scheme different from the first communication scheme, when the cell monitoring device (150) is determined to be in a sleep mode.

## Patentansprüche

1. Eine Zellüberwachungsvorrichtung (150), umfassend:
eine Zellüberwachungseinheit (152), die ausgestaltet ist einen Zustand mindestens einer Batteriezelle einer Batterie (110) zu messen, um Messdaten zu erzeugen; und
eine erste Kommunikationseinheit (154), die ausgestaltet ist, um eine drahtlose Kommunikation mit einer Gateway-Vorrichtung (120) durchzuführen, um die Messdaten, die den gemessenen Zustand der mindestens einen Batteriezelle angeben, zu übertragen;
**dadurch gekennzeichnet, dass** die erste Kommunikationseinheit (154) ausgestaltet ist
• zur Durchführung einer drahtlose Kommunikation mit der Gateway-Vorrichtung (120) mittels eines ersten Kommunikationsschemas, wenn sich die Zellüberwachungsvorrichtung (150) in einem aktiven Modus befindet, und
• zur Durchführung einer drahtlosen Kommunikation mit der Gateway-Vorrichtung (120) mittels eines zweiten Kommunikationsschemas, das sich von dem ersten Kommunikationsschema unterscheidet, wenn sich die Zellüberwachungsvorrichtung (150) in einem Ruhemodus befindet.

2. Die Zellüberwachungsvorrichtung (150) gemäß Anspruch 1, wobei die Zellüberwachungsvorrichtung (150) ausgestaltet ist, um als Antwort auf den Empfang einer Ruhemodusanforderung durch die erste Kommunikationseinheit (154) in den Ruhemodus zu wechseln.

3. Die Zellüberwachungsvorrichtung (150) gemäß einem der Ansprüche 1 oder 2, wobei die Zellüberwachungsvorrichtung (150) ausgestaltet ist, um als Antwort auf den Empfang einer Aufwachanforderung durch die erste Kommunikationseinheit (154) in den aktiven Modus zu wechseln.

4. Die Zellüberwachungsvorrichtung (150) gemäß einem der Ansprüche 1 bis 3, wobei die Zellüberwachungsvorrichtung (150) ausgestaltet ist, um in Antwort auf die Feststellung, dass der Zustand der mindestens einen Batteriezelle ein Zustand ist, in dem eine Betriebsbedingung für die mindestens eine Batteriezelle kritisch ist, in den aktiven Modus zu wechseln, und die erste Kommunikationseinheit (154) optional ausgestaltet ist, um eine Aufwachanforderung an mindestens eine andere Zellüberwachungsvorrichtung (150) zu senden.

5. Die Zellüberwachungsvorrichtung (150) gemäß einem der Ansprüche 1 bis 4, wobei die erste Kommunikationseinheit (154) im aktiven Modus ausgestaltet ist, um die Messdaten an die Gateway-Vorrichtung (120) zu übertragen, und wobei die erste Kommunikationseinheit (154) im Ruhemodus ausgestaltet ist, um Aufrechterhaltungszeichen an die Gateway-Vorrichtung (120) zu übertragen.

6. Die Zellüberwachungsvorrichtung (150) gemäß Anspruch 5, wobei die erste Kommunikationseinheit (154) ausgestaltet ist, um die Messdaten im aktiven Modus mit einer höheren Periodizität zu übertragen als der Periodizität, mit der die Aufrechterhaltungszeichen im Ruhemodus übertragen werden.

7. Die Zellüberwachungsvorrichtung (150) gemäß einem der Ansprüche 1 bis 6, wobei das erste Kommunikationsschema eine größere Sendeleistung verwendet als das zweite Kommunikationsschema.

8. Die Zellüberwachungsvorrichtung (150) gemäß einem der Ansprüche 1 bis 7, wobei das erste Kommunikationsschema die drahtlose Kommunikation über ein drahtloses lokales Netzwerk, WLAN, durchführt.

9. Die Zellüberwachungsvorrichtung (150) gemäß einem der Ansprüche 1 bis 8, wobei das zweite Kommunikationsschema die drahtlose Kommunikation mittels eines Standards für drahtlose Kurzstreckenkommunikation durchführt.

10. Die Zellüberwachungsvorrichtung (150) gemäß einem der Ansprüche 1 bis 9, wobei die erste Kommunikationseinheit (154) mindestens ein gemeinsames Antennenelement (156) aufweist, um die drahtlose Kommunikation über das erste Kommunikationsschema und über das zweite Kommunikationsschema durchzuführen.

11. Ein Verfahren zur Übertragung von Messdaten, das von einer Zellüberwachungsvorrichtung (150) durchgeführt wird, umfassend:
Messen eines Zustands mindestens einer Batteriezelle einer Batterie (110), um Messdaten zu erzeugen; und
Durchführen einer drahtlosen Kommunikation mit einer Gateway-Vorrichtung (120), um die Messdaten zu übertragen, die den gemessenen Zustand der mindestens einen Batteriezelle angeben;
**dadurch gekennzeichnet, dass** die drahtlose Kommunikation mit der Gateway-Vorrichtung (120) mittels eines ersten Kommunikationsschemas durchgeführt wird, wenn sich die Zellüberwachungsvorrichtung (150) in einem aktiven Modus befindet, und
die drahtlose Kommunikation mit der Gateway-Vorrichtung (120) mittels eines zweiten Kommunikationsschemas durchgeführt wird, das sich von dem ersten Kommunikationsschema unterscheidet, wenn sich die Zellüberwachungsvorrichtung (150) in einem Ruhemodus befindet.

12. Batteriemanagementsystem (100, 400), das eine Hauptsteuereinheit (106) und eine Gateway-Vorrichtung (120) umfasst,
wobei die Gateway-Vorrichtung (120) mindestens eine zweite Kommunikationseinheit (118) aufweist, die ausgestaltet ist, eine drahtlose Kommunikation mit mindestens einer Zellüberwachungsvorrichtung (150) durchzuführen, um Messdaten zu empfangen, die den gemessenen Zustand mindestens einer Batteriezelle angeben, wobei die Zellüberwachungsvorrichtung (150) ausgestaltet ist, den Zustand der mindestens einen Batteriezelle einer Batterie (110) zu messen, und
**dadurch gekennzeichnet, dass** die zweite Kommunikationseinheit (118) ausgestaltet ist
• zur Durchführung einer drahtlosen Kommunikation mit der Zellüberwachungsvorrichtung (150) mittels eines ersten Kommunikationsschemas, wenn die Hauptsteuereinheit (106) feststellt, dass sich die Zellüberwachungsvorrichtung in einem aktiven Modus befindet, und
• zur Durchführung einer drahtlosen Kommunikation mit der Zellüberwachungsvorrichtung (150) mittels eines zweiten Kommunikationsschemas, das sich von dem ersten Kommunikationsschema unterscheidet, wenn die Hauptsteuereinheit (106) feststellt, dass sich die Zellüberwachungsvorrichtung in einem Ruhemodus befindet.

13. Das Batteriemanagementsystem (100, 400) gemäß Anspruch 12, wobei die Hauptsteuereinheit (106) ausgestaltet ist, um die mindestens eine zweite Kommunikationseinheit (118) zu steuern, eine Aufwachanforderung an die mindestens eine Zellüberwachungsvorrichtung (150) zu senden, um Messdaten von der mindestens einen Zellüberwachungsvorrichtung (150) zu erlangen.

14. Das Batteriemanagementsystem (100, 400) gemäß einem der Ansprüche 12 oder 13, das weiterhin mindestens eine Zellüberwachungsvorrichtung (150) gemäß einem der Ansprüche 1 bis 10 umfasst.

15. Ein Verfahren zum Empfangen von Messdaten, das von einem Batteriemanagementsystem (100, 400) durchgeführt wird, umfassend:
Durchführen einer drahtlosen Kommunikation mit mindestens einer Zellüberwachungsvorrichtung (150), um Messdaten zu empfangen, die den gemessenen Zustand mindestens einer Batteriezelle angeben, wobei die Zellüberwachungsvorrichtung (150) ausgestaltet ist, den Zustand der mindestens einen Batteriezelle einer Batterie (110) zu messen,
**dadurch gekennzeichnet, dass** die drahtlose Kommunikation mit der Zellüberwachungsvorrichtung (150) mittels eines ersten Kommunikationsschemas durchgeführt wird, wenn festgestellt wird, dass sich die Zellüberwachungsvorrichtung (150) in einem aktiven Modus befindet, und
die drahtlose Kommunikation mit der Zellüberwachungsvorrichtung (150) mittels eines zweiten Kommunikationsschemas durchgeführt wird, das sich von dem ersten Kommunikationsschema unterscheidet, wenn festgestellt wird, dass sich die Zellüberwachungsvorrichtung (150) in einem Ruhemodus befindet.

## Revendications

1. Dispositif de surveillance de cellule (150), qui comprend :
une unité de surveillance de cellule (152), qui est configurée pour mesurer un état d'au moins une cellule de batterie d'une batterie (110) pour générer des données de mesure ; et
une première unité de communication (154), qui est configurée pour effectuer une communication sans fil avec un dispositif passerelle (120) pour transmettre les données de mesure indiquant l'état mesuré d'au moins une cellule de batterie ;
**caractérisé en ce que** la première unité de communication (154) est configurée
• pour établir une communication sans fil avec le dispositif passerelle (120) par un premier schéma de communication, lorsque le dispositif de surveillance de cellule (150) est en mode actif, et
• pour établir une communication sans fil avec le dispositif passerelle (120) selon un deuxième schéma de communication différent du premier schéma de communication, lorsque le dispositif de surveillance de cellule (150) est en mode veille.

2. Dispositif de surveillance de cellule (150) selon la revendication 1, dans lequel le dispositif de surveillance de cellule (150) est configuré pour entrer dans le mode veille, en réponse à la réception d'une demande de veille par la première unité de communication (154).

3. Dispositif de surveillance de cellule (150) selon l'une des revendications 1 ou 2, dans lequel le dispositif de surveillance de cellule (150) est configuré pour entrer dans le mode actif, en réponse à la réception d'une demande de réveil par la première unité de communication (154).

4. Dispositif de surveillance de cellule (150) selon l'une des revendications 1 à 3, dans lequel, en réponse à la détermination que l'état de l'au moins une cellule de batterie est un état dans lequel une condition de fonctionnement est critique pour l'au moins une cellule de batterie, le dispositif de surveillance de cellule (150) est configuré pour entrer dans le mode actif et éventuellement la première unité de communication (154) est configurée pour transmettre une demande de réveil à au moins un autre dispositif de surveillance de cellule (150).

5. Dispositif de surveillance de cellule (150) selon l'une des revendications 1 à 4, dans lequel, en mode actif, la première unité de communication (154) est configurée pour transmettre les données de mesure au dispositif passerelle (120), et en mode veille, la première unité de communication (154) est configurée pour transmettre des signaux de vie au dispositif passerelle (120).

6. Dispositif de surveillance de cellule (150) selon la revendication 5, dans lequel la première unité de communication (154) est configurée pour transmettre les données de mesure avec une périodicité plus grande dans le mode actif que la périodicité, avec laquelle les signaux de vie sont transmis dans le mode veille.

7. Dispositif de surveillance de cellule (150) selon l'une des revendications 1 à 6, dans lequel le premier schéma de communication utilise une puissance d'émission plus importante que le deuxième schéma de communication.

8. Dispositif de surveillance de cellule (150) selon l'une des revendications 1 à 7, dans lequel le premier schéma de communication effectue une communication sans fil par l'intermédiaire d'un réseau local sans fil, WLAN.

9. Dispositif de surveillance de cellule (150) selon l'une des revendications 1 à 8, dans lequel le deuxième schéma de communication effectue une communication sans fil par une norme de communication sans fil à courte portée.

10. Dispositif de surveillance de cellule (150) selon l'une des revendications 1 à 9, dans lequel la première unité de communication (154) a au moins un élément d'antenne commun (156) pour effectuer la communication sans fil par le biais du premier schéma de communication et par le biais du deuxième schéma de communication.

11. Procédé de transmission de données de mesure, exécuté par un dispositif de surveillance de cellule (150), comprenant :
la mesure d'un état d'au moins une cellule de batterie d'une batterie (110) pour générer des données de mesure ; et
effectuer une communication sans fil avec un dispositif passerelle (120) pour transmettre les données de mesure indiquant l'état mesuré d'au moins une cellule de batterie ;
**caractérisé en ce que** la communication sans fil avec le dispositif passerelle (120) est réalisée par un premier schéma de communication, lorsque le dispositif de surveillance de cellule (150) est en mode actif, et que
la communication sans fil avec le dispositif passerelle (120) est assurée par un deuxième schéma de communication différent du premier schéma de communication, lorsque le dispositif de surveillance de cellule (150) est en mode veille.

12. Système de gestion de batterie (100, 400), qui comprend une unité de commande principale (106) et un dispositif passerelle (120),
dans lequel le dispositif passerelle (120) possède au moins une deuxième unité de communication (118), qui est configurée pour effectuer une communication sans fil avec au moins un dispositif de surveillance de cellule (120), qui est configuré pour mesurer un état d'au moins une cellule de batterie d'une batterie (110), pour recevoir des données de mesure indiquant l'état mesuré d'au moins une cellule de batterie, et
**caractérisé en ce que** la deuxième unité de communication (118) est configurée
• pour effectuer une communication sans fil avec le dispositif de surveillance de cellule (150) par un premier schéma de communication, lorsque l'unité de commande principale (106) détermine que le dispositif de surveillance de cellule est en mode actif, et
• pour établir une communication sans fil avec le dispositif de surveillance de cellule (150) selon un deuxième schéma de communication différent du premier schéma de communication, lorsque l'unité de commande principale (106) détermine que le dispositif de surveillance de cellule est en mode veille.

13. Système de gestion de batterie (100, 400) selon la revendication 12, dans lequel l'unité de commande principale (106) est configurée pour commander l'au moins une deuxième unité de communication (118) pour transmettre une demande de réveil à l'au moins un dispositif de surveillance de cellule (150), pour acquérir des données de mesure à partir de l'au moins un dispositif de surveillance de cellule (150).

14. Système de gestion de batterie (100, 400) selon l'une des revendications 12 ou 13, comprenant en outre au moins un dispositif de surveillance de cellule (150) selon l'une des revendications 1 à 10.

15. Procédé de réception de données de mesure, mis en œuvre par un système de gestion de batterie (100, 400), comprenant :
l'exécution d'une communication sans fil avec au moins un dispositif de surveillance de cellule (150), qui est configuré pour mesurer un état d'au moins une cellule de batterie d'une batterie (110), pour recevoir des données de mesure indiquant l'état mesuré de l'au moins une cellule de batterie,
**caractérisé en ce que** la communication sans fil avec le dispositif de surveillance de cellule (150) est effectuée par un premier schéma de communication, lorsque le dispositif de surveillance de cellule (150) est déterminé comme étant en mode actif, et
la communication sans fil avec le dispositif de surveillance de cellule (150) est réalisée par un deuxième schéma de communication différent du premier schéma de communication, lorsque le dispositif de surveillance de cellule (150) est déterminé comme étant en mode veille.
